# EUROPEAN PATENT SPECIFICATION

(11) **EP 1 868 787 B1**
(45) Date of publication and mention of the grant of the patent: **25.05.2011**
(21) Application number: 05784184.3
(22) Date of filing: 09.09.2005
(51) Int. Cl.: B29C 31/04, B29C 43/08, B29C 43/34, B29C 69/02, B29B 11/12, B29B 11/14, B65G 47/38

(54) **APPARATUS FOR TRANSFERRING DOSES**
VORRICHTUNG ZUR ÜBERTRAGUNG VON DOSEN
APPAREIL DE TRANSFERT DE DOSES

(30) Priority: 13.04.2005 WO PCT/IB2005/000968; 22.04.2005 WO PCT/IB2005/001085
(43) Date of publication of application: 26.12.2007
(73) Proprietor: SACMI Cooperativa Meccanici Imola Società Cooperativa, 40026 Imola (BO) (IT)
(72) Inventor: CAMERANI, Matteo, I-48026 Russi (RA) (IT); BORGATTI, Maurizio, I-40026 Imola (IT); BALBONI, Alessandro, I-40057 Granarolo dell'Emilia (BO) (IT); PARRINELLO, Fiorenzo, I-40059 Medicina (IT)
(74) Representative: Crugnola, Pietro
(86) International application number: PCT/IB2005/002674
(87) International publication number: WO 2006/109108

(56) References cited:
- EP-A- 0 568 823
- EP-A- 1 110 642
- EP-A- 1 193 054
- EP-A- 1 361 000
- WO-A-2005/007378
- WO-A-2005/102641
- US-A- 2 894 285
- US-A- 4 336 011
- US-A- 4 979 282
- US-A1- 2002 150 647
- US-B1- 6 349 838
- PATENT ABSTRACTS OF JAPAN vol. 2003, no. 12, 5 December 2003 (2003-12-05) & JP 2004 276371 A (TOYO SEIKAN KAISHA LTD), 7 October 2004 (2004-10-07)
- PATENT ABSTRACTS OF JAPAN vol. 015, no. 411 (M-1170), 21 October 1991 (1991-10-21) & JP 03 169605 A (YOSHINO KOGYOSHO CO LTD), 23 July 1991 (1991-07-23)
- PATENT ABSTRACTS OF JAPAN vol. 2003, no. 09, 3 September 2003 (2003-09-03) & JP 2003 127211 A (TOYO SEIKAN KAISHA LTD), 8 May 2003 (2003-05-08)
- PATENT ABSTRACTS OF JAPAN vol. 2003, no. 06, 3 June 2003 (2003-06-03) & JP 2003 039531 A (TOYO SEIKAN KAISHA LTD), 13 February 2003 (2003-02-13)

## Description

The invention relates to an apparatus for transferring a dose of plastics to a forming device to form a preform from which it is possible to obtain a container, in particular a bottle.

Apparatuses are known for compression-moulding objects in plastics, for example caps for bottles, comprising a rotating moulding carousel that carries a plurality of moulds each comprising a die and a punch. During rotation, each die receives a dose of plastics in a highly viscous liquid state. The dose is pressed between the die and the respective punch over a circumference arc travelled by the moulding carousel. The pressing step is followed by opening of the mould and extraction of the moulded object from the apparatus.

Each dose is dispensed by an extruding device with which a transfer device is associated, which device also has the shape of a carousel, comprising a plurality of removing elements that successively remove the doses dispensed by the extruding device and transfer them to the moulding carousel.

The plastics that constitute the doses tend to adhere to the surfaces with which they come into contact, due to the physical state of the highly viscous liquid. The adhesive properties of the plastics make it difficult to transfer the dose, which can adhere to the walls of the die, especially if the dose is dropped through gravity into the die. This defect is particularly noticeable if doses of the type used to obtain preforms have to be transferred. Such doses in fact comprise a quantity of the plastics greater than the doses required to mould caps and normally have an elongated shape. The dies in which the preforms are shaped are provided with a relatively narrow and deep cavity and the dose may be unable to position itself correctly inside the die cavity because it adheres to the walls of the cavity before reaching the bottom thereof. This produces unequal distribution of the plastics in the cavity, which may cause defects in the preform and therefore in the bottle.

Furthermore, a portion of dose may even remain outside the cavity of the die, protruding therefrom and preventing the die and the punch from pressing against each other during the moulding phase. This may cause not only the production of rejects and an arrest of the production cycle to clean the reject material off the mould but also possible damage to the mould and to its driving device.

Known apparatuses are thus not suitable for processing doses of relatively large dimensions such as for example the doses for obtaining preforms for bottles. US6349838 discloses a bottle that is formed by biaxially stretch-blow-molding a thermoplastic resin. EP0568823 discloses a method and equipment for forming a composite synthetic resin material. The composite synthetic resin material comprises an inner synthetic resin arranged within an outer synthetic resin. JP2004276371 discloses a synthetic resin supply device comprising an extrusion port for extruding a synthetic resin and a cutter for cutting the synthetic resin. JP03169605 discloses a method for molding a bottom part of a preform. An end edge of a cylindrical preform is heated by an infrared ray-heater. Then a heating jig is pressure-contacted to a corner inside the end edge of the cylindrical preform whereby the end edge is fused. The cylindrical preform is pushed into a mold and the end edge is welded thereby obtaining its bottom. JP2003127211 discloses a method and apparatus for molding a preform. In the method, a thermoplastic resin is plasticized in a multiple screw extruder so as to obtain molten resin lumps that are fed to a compression molding position to be subjected to compression molding.

US2894285 discloses a method and an apparatus for feeding measured charges of workable organic plastic material in heated condition, directly into the molds of a forming machine. Each mold comprises a die element and a further die element aligned with one another and designed to cooperate to obtain a finished object. There is provided a plasticating and extruding member for extruding the organic plastic material, and a conduit in which a plunger is adapted for reciprocating motion. The apparatus further comprises stripper arms that are fulcrumed and that comprise a pair of semi-circular members which, in a closed position, form a slight clearance circle about the outside of the plunger. When the plunger reaches its outermost position the semi-circular members move from an open position to a closed position, and the plunger is withdrawn so that a plastic gob of the organic plastic material is stripped from the plunger and drops into a cavity of a mold.

EP1361000 discloses an apparatus for sorting products such as fruits, comprising an endless conveyor with product carriers for conveying the products in a transport direction. The product carriers can assume two positions, viz. a conveying position for conveying the products to discharge paths, and a releasing position for releasing products adjacent a desired discharge path.

US2002150647 discloses an automatic slug feeding device for delivering slugs to a compression mold for molding golf ball cores.

EP1110642 discloses a device for feeding a plurality of side-by-side longitudinal bars for the manufacture of welded laths.

An object of the invention is to improve the apparatuses for transferring doses of flowable material, particularly in compression-moulding of plastics.

Another object is to provide an apparatus that enables doses to be transferred, in particular doses of plastics, to receiving means comprising, for example, a moulding device, by correctly positioning the doses in the receiver means, even when the doses have a relatively high volume and a relatively complex shape. A further object is to provide an apparatus for transferring doses in a controlled manner to receiving means, comprising for example a moulding device. Another object is to provide an apparatus for transferring doses, in particular plastics, that can be driven in a simple manner.

According to the invention, there is provided an apparatus according to claim 1.

Owing to the first closing means and to the second closing means it is possible to control in an effective manner the transfer of the dose from the dose transferring means to the receiving means, which may in particular comprise a die cavity.

In a version, the first closing means and the second closing means are driven by the same driving device. Owing to this version, it is possible to control in a simple and substantially simultaneous manner the first closing means and the second closing means.

The invention can be better understood and implemented with reference to the enclosed drawings, that illustrate some embodiments thereof by way of non-limitative example in which:
Figure 1 is a schematic plan view of an apparatus comprising transferring means for transferring doses of plastics to a moulding device;
Figure 2 is a section of the transferring means of the apparatus in Figure 1, taken along a longitudinal axis of the transferring means;
Figure 3 is a section taken along a longitudinal plane of first transferring means included in the apparatus in Figure 1 and provided with end-forming means suitable for shaping an end zone of a dose;
Figure 4 is a section taken along a further longitudinal plane, substantially orthogonal to the longitudinal plane in Figure 3, illustrating an alternative version of the end-forming means;
Figure 5 is a section like the one in Figure 4, showing another alternative version of the end-forming means;
Figure 6 is a plan view of closing means included in the first transferring means, in a closing configuration;
Figure 7 is a plan view of the closing means in Figure 6 in an opening configuration;
Figure 8 is a perspective view from above of the closing means in Figure 6, in the closing configuration;
Figure 9 is a perspective view from below of the first transferring means provided with the closing means in Figure 6, in the opening configuration;
Figure 10 is a schematic side view of a dose of plastics obtainable with the end-forming means in Figure 3 ;
Figure 11 is a view like the one in Figure 10, showing a dose obtainable with the end-forming means in Figure 4 ;
Figure 12 is a view like the one in Figure 10, showing a dose obtainable with the end-forming means in Figure 5 ;
Figure 13 is a schematic and enlarged plan view showing sensor means of the apparatus in Figure 1.

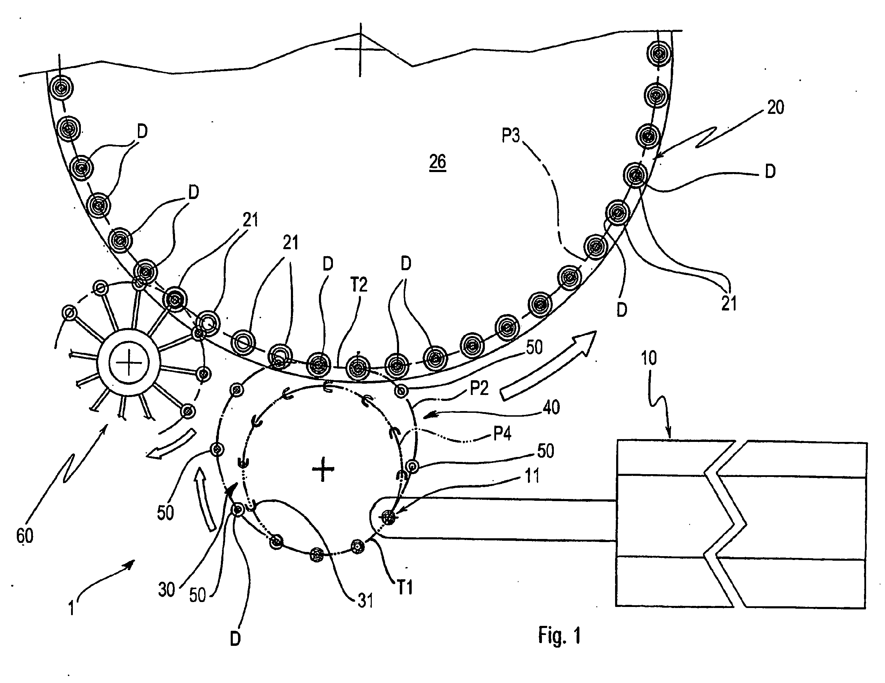

Figure 1 shows an apparatus 1 for transferring doses D of plastics, for example polyethyleneterephthalate (PET), to a moulding device 20 for forming preforms, from which it is possible to obtain containers, for example bottles, by means of stretch-blow moulding.

The doses D are dispensed by dispensing means 10 comprising a plastics extruder, provided with an outlet 11 from which plastics in a highly viscous liquid state exit. Cutting means is provided, that is not shown, for cutting the plastics exiting from the outlet 11 so as to define the doses D.

The moulding device 20 comprises a carousel 26 rotatable around a vertical axis and supporting a plurality of moulds each comprising a die 21 and a punch that is not shown. Each die 21 comprises a lower part in which a cavity is obtained with a substantially cylindrical shape having a curved bottom and an upper part having a through hole provided with radial projections suitable for forming a neck of the platform provided with undercuts, for example threading. The upper part is divided into at least two movable parts that are moved away from one another when the preform is extracted from the die 21.

Each punch interacts with the corresponding die 21 to form an internal surface of the preform during a moulding step. In this phase, the punch is arranged inside the cavity of the corresponding die 21 for compression-moulding the dose D previously transferred to the cavity of the die 21.

The apparatus 1 furthermore comprises an extracting device 60 for removing the preforms from the corresponding moulds and moving them away from the moulding device 20.

To transfer the doses D from the outlet 11 to the cavities of the dies 21, the apparatus 1 comprises first transferring means 40 and second transferring means 30.

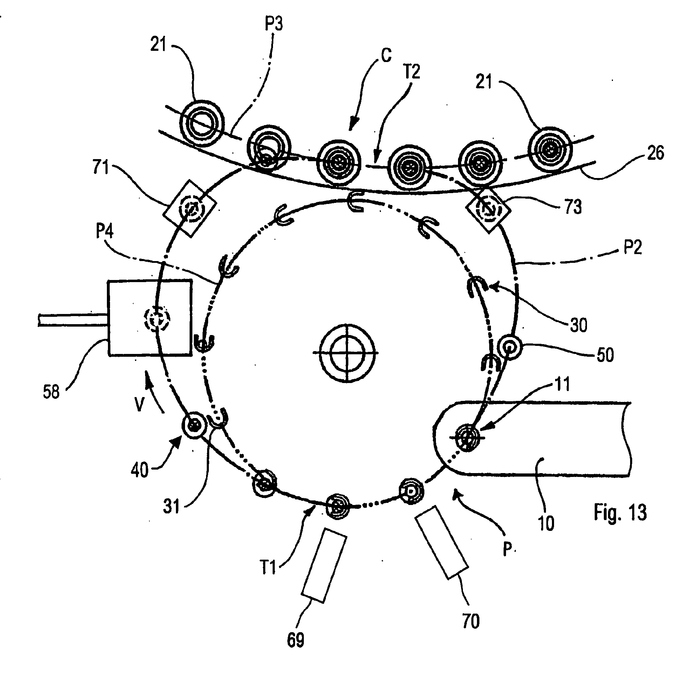

The first transferring means 40 comprises a plurality of transferring chambers 50 movable in a substantially continuous manner along a loop path P2. As shown in Figure 13, along the loop path P2 it is possible to define a removing position P, in which each transferring chamber 50 receives a dose D from the second transferring means 30, and a delivery position C, in which the transferring chamber 50 releases the dose D in a die 21 underneath.

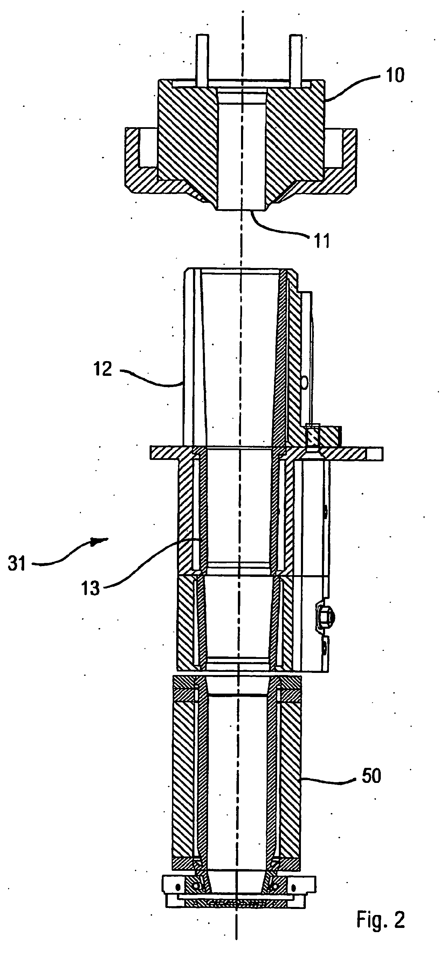

The second transferring means 30 comprises a plurality of transferring elements 31, each of which, as shown in Figure 2, is provided with an upper portion 12 having a "U" shape or "C" shape in such a way as to define a channel open on one side. Each transferring element 31 furthermore comprises a funnel portion 13 arranged below the upper portion 12.

The transferring elements 31 are fitted to a respective carousel rotatable around a vertical rotation axis and are therefore movable in a substantially continuous manner along a circular path P4, arranged at a higher level than the loop path P2 of the first transferring means 40. As shown in Figure 1, it is possible to identify a first portion T1 in which the circular path P4 substantially coincides with the loop path P2.

The loop path P2 is at a higher level than a further circular path P3 along which the dies 21 and the corresponding punches move. It is possible to identify a second portion T2 in which the loop path P2 substantially coincides with the further circular path P3.

During operation, the cutting means separates a dose D from the plastics exiting from the outlet 11 of the dispensing means 10. The dose D is removed by a transferring element 31 that passes below the outlet 11. Whilst the transferring element 31 moves along the circular path P4, the dose D descends through gravity inside the upper portion 12 and therefore inside the funnel portion 13. Along the first portion T1, the transferring element 31 moves by keeping itself in a position that is substantially coaxial to a transferring chamber 50 underneath, as shown in Figure 2, so that the dose D moves from the transferring element 31 to inside the transferring chamber 50 underneath. The funnel portion 13 ensures that the dose D is centred correctly in the transferring chamber 50. The dose D is transported from the transferring chamber 50 along the loop path P2 until it reaches the second portion T2. In this portion, the transferring chamber 50 moves by keeping itself above a corresponding die 21 and the dose D has at its disposal a sufficient period of time to descend into the die 21.

In a version that is not shown, the transferring elements 31, each comprising the upper portion 12 and the funnel portion 13, can be fixed to the transferring chambers 50 underneath. In this case, the transferring elements 31 do not move along the circular path P4, but move along the loop path P2 together with the respective transferring chambers 50. It is possible to provide a jet of pressurised fluid, for example compressed air, to facilitate the descent of the dose D inside the assembly formed by the transferring element 31 and by the transferring chamber 50.

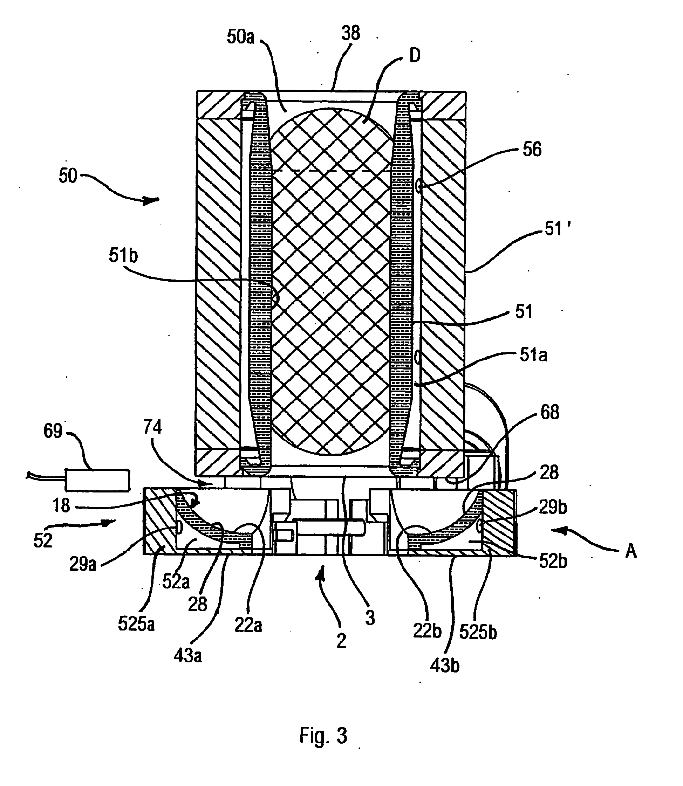

As shown in Figure 3, each transferring chamber 50 comprises a side wall 51 internally delimited by an internal surface 51b that defines an internal cavity or housing 50a in which the dose D can be received. The internal surface 51b is substantially cylindrical and may have a diameter that is not greater than the diameter of the die cavity 21.

The transferring chamber 50 is delimited below by a lower base wall 52.

The lower base wall 52 is not a single body but consists of two elements, namely a first closing element 525a and a second closing element 525b, that are rotatable in relation to the side wall 51 around respective vertical axis pivots fixed to the wall 51. The two elements 525a, 525b rotated to close against each other, close the outlet of the chamber 50 and form the lower base wall 52 which, as will be explained below, may be porous. On the other hand, the two elements 525a, 525b rotated to the outside when open, enable the dose D to exit from the transferring chamber 50.

The first closing element 525a and the second closing element 525b thus act as closing means 2 to selectively close or open an opening 3 arranged in a lower region of the transferring chamber 50 and surrounded by the side wall 51. The first closing element 525a and the second closing element 525b are movable between an opening configuration A and a closing configuration. In the opening configuration A, shown in Figure 3, the first closing element 525a and the second closing element 525b are spaced apart from one another to enable the dose D to exit from the transferring chamber 50 through the opening 3 to enter a die 21 underneath. In the closing configuration, the first closing element 525a and the second closing element 525b are brought near each other to close the opening 3 and prevent the dose D from exiting the transferring chamber 50. In the closing configuration, the first closing element 525a and the second closing element 525b define the lower base wall 52 of the transferring chamber 50.

On the closing means 2, end-forming means 18 is obtained to shape an end zone 19 of the dose in such a manner as to confer to the end zone 19 a form that facilitates the exit of the dose from the transferring chamber 50 and the entry of the dose into the die 21. The end-forming means 18 comprises a first forming wall 22a obtained on the first closing element 525a and a second forming wall 22b obtained on the second closing element 525b. The first forming wall 22a and the second forming wall 22b are symmetrical in relation to a plane containing a longitudinal axis of the transferring chamber 50.

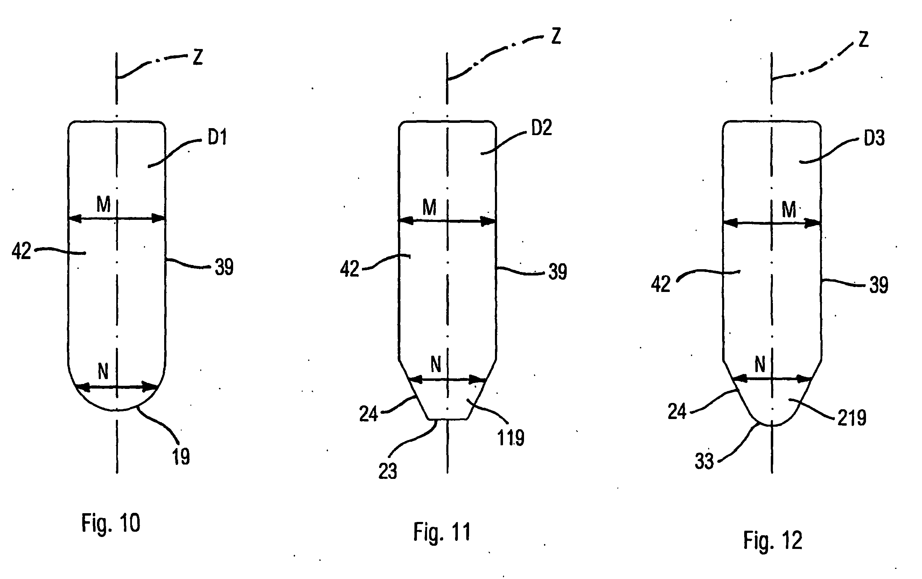

The first forming wall 22a and the second forming wall 22b are delimited by respective concave surfaces 28 that can be shaped as portions of spherical surfaces. When the first forming element 525a and the second forming element 525b are in the closing configuration, the concave surfaces 28 define on the lower base wall 52 a recess having the shape of a spherical cover. Owing to its highly viscous liquid state, coming into contact with the end-forming means 18, the dose in the end zone 19 takes on the form of a recess defined in the closing means 2 by the first forming wall 22a and by the second forming wall 22b. In this way a dose D1 is obtained like the one shown in Figure 10.

The dose D1 comprises an elongated body 39 with a substantially cylindrical shape that extends along a longitudinal axis Z. The elongated body (39) is a solid body, i.e. free of internal cavities. The elongated body 39 has, in its central portion 42, a transverse dimension M measured transversely to the longitudinal axis Z and in particular perpendicularly to said axis. In the specific case of Figure 10, the transverse dimension M is the diameter of the elongated body 39. The end zone 19 delimits the elongated body 39 in a region of the elongated body 39 intended to first enter the die 21. The end zone 19 is externally delimited by a curved and convex surface that may substantially have the shape of a spherical cover. The end zone 19 has a respective transverse dimension N, measured transversely to the longitudinal axis Z, less than the transverse dimension M of the elongated body 39. In particular, the respective transverse dimension N decreases along the longitudinal axis Z, moving away from the central portion 42 of the elongated body 39. In other words, the end-forming means 18 gives the dose D1 a form in which the end zone 19 progressively narrows as it moves away from the central portion 42 of the elongated body 39. Owing to this form, the dose D1 can easily exit from the transferring chamber 50 and, through the opening 3, enter the die 21 below. In fact, the end zone 19 can descend into the die 21 without touching the walls that internally delimit the cavity of the die 21 and help the central portion 42 to position itself correctly, by guiding the central portion 42 whilst the latter enters the die 21.

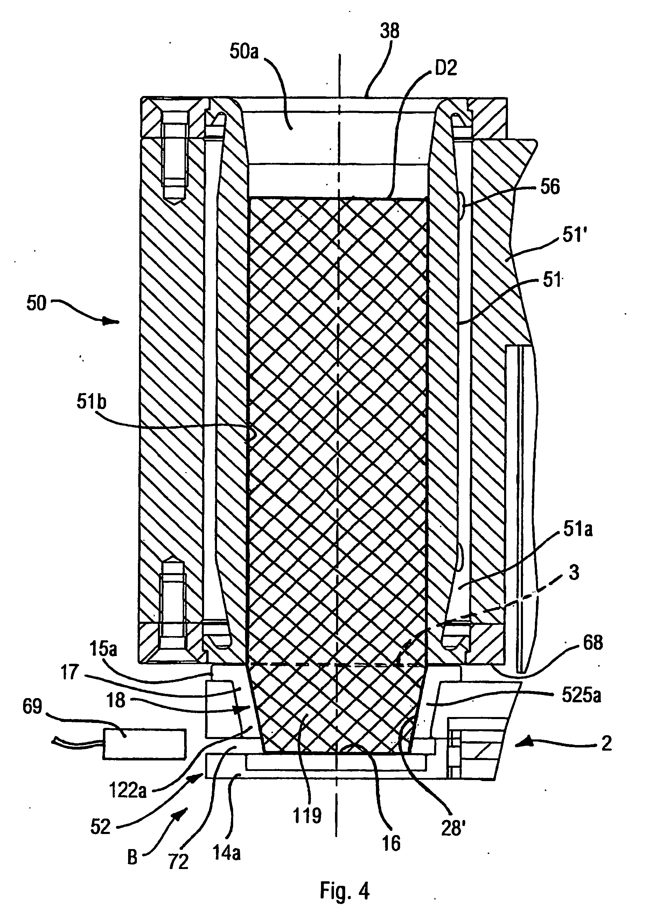

An alternative version of the end-forming means 18 is shown in Figure 4 in which the closing means 2 is in the closing configuration, which is indicated by B. Figure 4 is a section taken along a longitudinal plane perpendicular to the further longitudinal plane along which the section of Figure 3 is taken. Accordingly, in Figure 4 only the first closing element 525a is visible. The second closing element 525b has a structure that is completely similar to what is disclosed below with reference to the first closing element 525a.

The first closing element 525a comprises a first base portion 14a and a first side portion 15a, interposed between the side wall 51 and the first base portion 14a. The first side portion 15a is provided with a recess internally delimited by a first forming wall 122a having the shape of a half of a frustum cone. In the closing configuration B in which the first closing element 525a is in contact with the second closing element 525b, the first base portion 14a and a corresponding second base portion obtained on the second closing element 525b define the lower base wall 52, delimited above by a flat surface 16 that frontally shapes the dose. In the closing configuration B, the first side portion 15a and a corresponding second side portion obtained on the second closing element 525b define an annular body 17 provided with a central passage traversable by the dose. This passage is internally delimited by a frustum-conical shaped surface 28'. The frustum cone has a larger base facing the housing 50a and a smaller base facing the lower base wall 52.

The first base portion 14a is separated from the first side portion 15a so that, in the closing configuration B, between the annular body 17 and the lower base wall 52 it is possible to define a gap 72.

The end-forming means 18 shown in Figure 4 enables a dose D2 to be obtained as shown in Figure 11. The dose D2 comprises an end zone 119 frontally delimited by a transverse surface 23 that is substantially flat in shape. The transverse surface 23 is arranged transversely, and more particularly perpendicularly, to the longitudinal axis Z and is shaped by the flat surface 16 of the end-forming means 18 when the dose D2 is inside the transferring chamber 50. The end zone 119 is laterally delimited by a frustum-conical surface 24 that has been shaped by the surface 28' of the end-forming means 18.

The end zone 119 has a respective transverse dimension N that is less than the transverse dimension M of the central portion 42 and that decreases in a substantially linear manner by moving away along the longitudinal axis Z from the central portion 42.

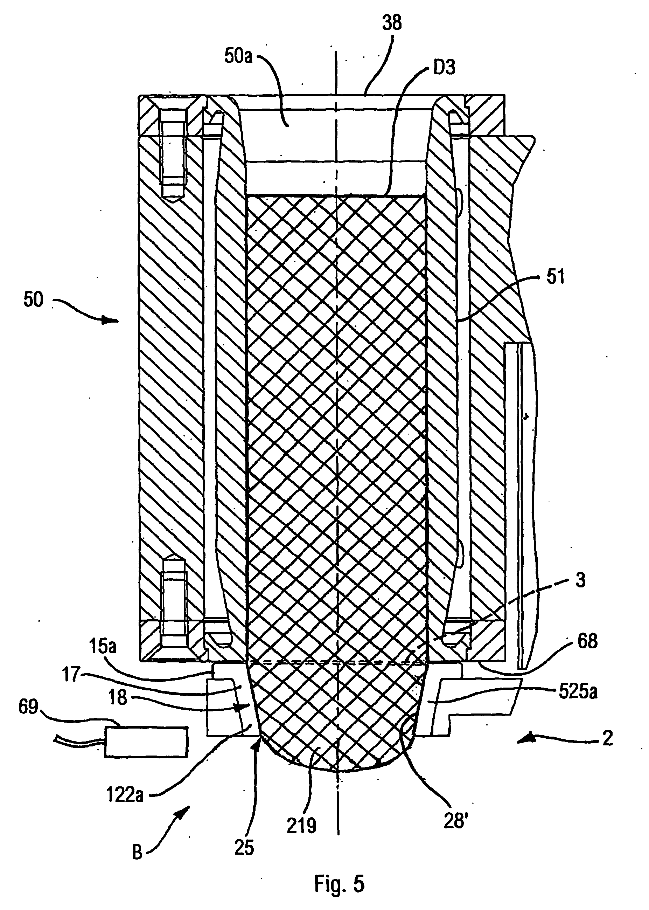

In another alternative version of the end-forming means 18, shown in Figure 5, the first closing element 525a is provided with the first side portion 15a but does not comprise the first base portion 14a. Similarly, the second closing element 525b is devoid of the second base portion. Therefore, in the closing configuration B, between the first closing element 525a and the second closing element 525b a further opening 25 is defined that is arranged below the opening 3 of the housing 50a.

The end-forming means 18 shown in Figure 5 enables a dose D3 to be obtained of the type shown in Figure 12. The dose D3 comprises an end zone 219 laterally delimited by a frustum-conical surface 24 as in the case of Figure 11. Nevertheless, unlike the dose D2 shown in Figure 11, the dose D3 in Figure 12 is not delimited, transversely to the longitudinal axis Z, by a substantially flat transverse surface. On the other hand, the dose D3 is delimited, transversely to the longitudinal axis Z, by a rounded surface 33.

Inside the transferring chamber 50, the end zone 219 is laterally shaped by the surface 28' so as to take on a frustum-conical shape. Owing to the force of gravity, the end zone 219, not being opposed by the lower base wall 52, tends to flow downwards through the further opening 25. In particular, the portions of the end zone 219 nearest the surface 28', being braked by the friction that is created on contact with the surface 28', move downwards more slowly than the further portions of the end zone 219 nearer to the longitudinal axis Z. In this way, the rounded surface 33 is defined. Owing to its shape, the end zone 219 enables the dose D3 to enter the die 21 very easily. In fact, the quantity of plastics that constitutes the end zone 219 is greater than that which constitutes the end zone 119 of the dose D2 shown in Figure 11. The quantity of plastics is thus increased, which, owing to the reduced transverse dimensions, can enter the cavity of the die 21 without interfering with the walls that delimit it internally.

It is furthermore noted that, through the further opening 25, it is possible to evacuate the air contained in the transferring chamber 50 whilst the dose D descends to the die 21.

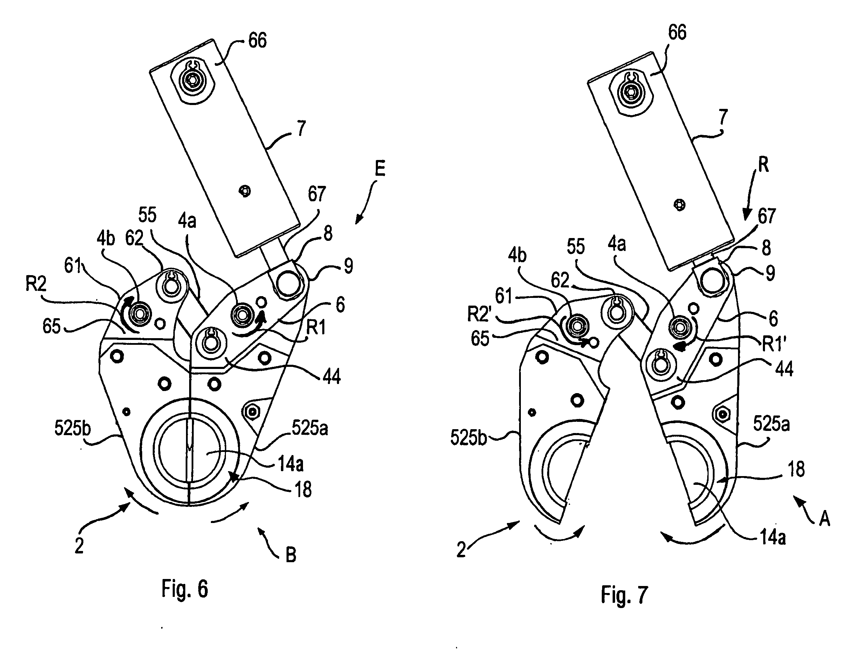

Figures 6 to 9 show how the first closing element 525a and the second closing element 525b are driven to go from the opening configuration A to the closing configuration B and vice versa. The first closing element 525a and the second closing element 525b are respectively rotatable around a first pivot 4a and a second pivot 4b. The first pivot 4a and the second pivot 4b extend along respective vertical axes substantially parallel to the side wall 51, in such a way that the first closing element 525a and the second closing element 525b move on a substantially horizontal plane with a pincer-like movement.

To the first closing element 525a a first lever 6 is fixed that is rotatable around the first pivot 4a, which is arranged in a central region of the first lever 6. The first lever 6 is rotatable by an actuator 7 having a head 8 rotatably connected to a first end 9 of the first lever 6. with a second end 44 of the first lever 6 opposite the first end 9 an end of a connecting rod 55 is rotatably connected. A further end of the connecting rod 55 is connected to a second lever 61 fixed to the second closing element 525b. The second lever 61 is rotatable around the second pivot 4b, arranged in a central zone of the second lever 61. The second lever 61 comprises a further first end 62 to which the connecting rod 55 is rotatably connected. A further second end 65 of the second lever 61, opposite the further first end 62, is fixed to the second closing element 525b, for example by screws.

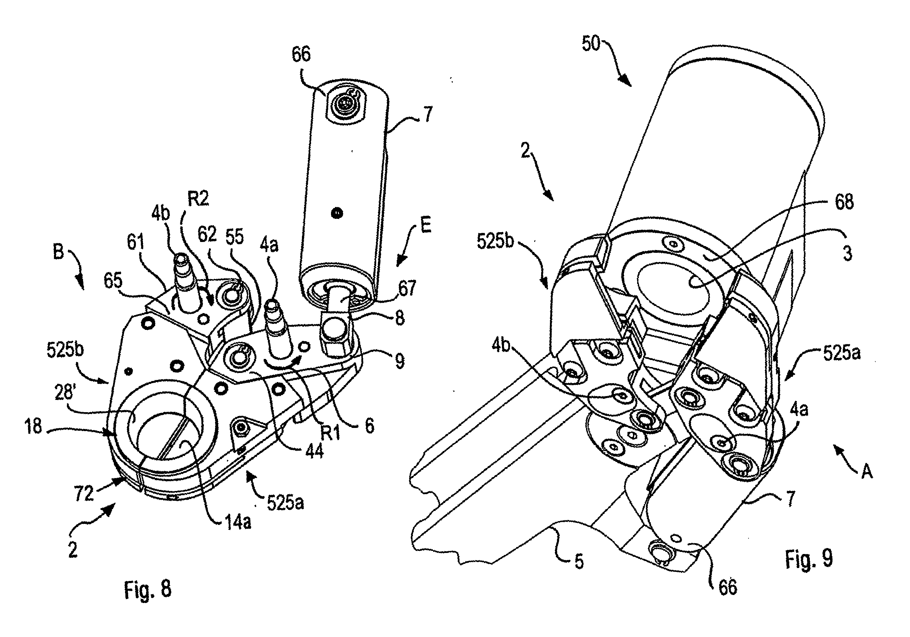

The actuator 7, which may in particular comprise a pneumatic cylinder, is provided with a stem 67 slidable between an extended position E shown in Figures 6 and 8, and a retracted position R, shown in Figure 7. In the extended position E, the stem 67 is outside a cylinder of the actuator 7, whereas in the retracted position R the stem 67 is almost completely inserted inside the cylinder of the actuator 7. By moving from the extended position E to the retracted position R or vice versa, the stem 67 performs a set stroke. The head 8 is connected to the stem 67.

The actuator 7 comprises a terminal part 66, opposite the head 8, rotatably connected to a support 5 provided in the first transferring means 40 to support the transferring chamber 50. In the closing configuration B, the stem 67 is in the extended position E, whereas in the opening configuration A, the stem 67 is in the retracted position R.

When, starting from the closing configuration B, it is desired to move the first closing element 525a and the second closing element 525b away from one another, the actuator 7 moves from the extended position E to the retracted position R. The first lever 6 and the first closing element 525a fixed to it are thus rotated around the first pivot 4a in a direction indicated by the arrow R1 in Figure 6. Owing to the connecting rod 55, the second lever 61, together with the second closing element 525b, is rotated around the second pivot 4b in a direction indicated by the arrow R2. The first closing element 525a and the second closing element 525b are thus moved away from each other and reach the opening configuration A.

When, starting with the opening configuration A, it is desired to return to the closing configuration B, the actuator 7 moves from the retracted position R to the extended position E, rotating the first lever 6 in a rotation direction R1' opposite the direction R1. Similarly, the second lever 61 is commanded by the connecting rod 55 to rotate in a rotation direction R2' opposite the direction R2. The first closing element 525a and the second closing element 525b are thus brought near each other to shut the opening 3 and return to the closing configuration B in which they prevent the dose D from exiting the transferring chamber 50.

The first closing element 525a and the second closing element 525b move substantially parallel to the opening 3, namely onto a plane parallel to a further plane containing a lower edge 68 of the transferring chamber 50.

Owing to the connecting rod 55, which transmits the movement of the actuator 7 from the first lever 6 to the second lever 61, a single actuator 7 is sufficient to simultaneously drive the first closing element 525a and the second closing element 525b.

Although Figures 6 to 9 show closing means 2 of the type shown in Figure 4, it is shown how also the closing means of the type shown in Figures 3 and 5 can be driven in a similar manner to what has been disclosed with reference to Figures 6 to 9.

In a version that is not shown, the first closing element 525a and the second closing element 525b can move between the opening configuration A and the closing configuration B or vice versa translating in relation to each other on a plane parallel to the further plane containing the lower edge 68 of the transferring chamber 50.

In another alternative version that is not shown the first closing element 525a and the second closing element 525b can rotate respectively around a first pivot 4a and a second pivot 4b having respective horizontal axes. In this version, the first pivot 4a and the second pivot 4b are connected to opposite parts of the lower edge 68 and have axes substantially parallel to the plane defined by the lower edge 68. The first closing element 525a and the second closing element 525b each have a movement like a door leaf.

In a further alternative version, that is not illustrated, the first closing element 525a and the second closing element 525b are driven between the opening configuration A and the closing configuration B by an operating fluid rather than by a mechanical system like the one comprising the first lever 6, the second lever 61 and the connecting rod 55.

In a still further version, the apparatus 1 comprises further closing means, that is not shown, for closing and/or opening an upper opening 38 of the housing 50a. The further closing means may be completely similar to the closing means 2. In this version, when a transferring chamber 50 receives a dose D from the transferring element 31, the further closing means is arranged in an open position so that the dose D, through the top opening 38, can enter the housing 50a. When, on the other hand, the transferring chamber 50 releases the dose D to the die 21, the closing means 2 is arranged in the opening configuration A whereas the further closing means is arranged in a closed position. As shown in Figures 3 to 5, each transferring chamber 50 may comprise anti-adhesion means to eliminate or at least reduce the adhesion between the plastics constituting the dose D and the surfaces that delimit the housing 50a.

In the version in Figure 3, the side wall 51 of the transferring chamber 50, the first forming wall 22a and the second forming wall 22b may be porous in such a way as to enable the passage of a fluid through the thickness thereof. A second side wall 51' is provided that is external and coaxial to the side wall 51. The second side wall 51' surrounds the side wall 51 and is joined to it at the upper and lower edges. Between the side wall 51 and the second side wall 51' a side chamber 51a is defined that surrounds the side wall 51 by 360 degrees and substantially extends along the entire height thereof. The side chamber 51a is connected to supply means, not illustrated in the Figures, that is suitable for sending gas under pressure through inlets 56 into the side chamber 51a and from there through the side wall 51 inside the transferring chamber 50.

In the version shown in Figure 3, a first external base wall 43a is provided that is placed outside the first forming wall 22a and is joined to it along its own external edge. A second external base wall 43b is placed outside the second forming wall 22b and is joined to it along a respective external edge. Between the first forming wall 22a and the first external base wall 43a a first lower chamber 52a is defined. Similarly, between the second forming wall 22b and the second external base wall 43b a second lower chamber 52b is defined. The first lower chamber 52a and the second lower chamber 52b are provided with further inlets, indicated respectively as 29a and 29b, connected to the supply means.

The pressurised gas is sent by the supply means to the first lower chamber 52a, to the second lower chamber 52b and to the side chamber 51a. From here, the pressurised gas passes through the first forming wall 22a, the second forming wall 22b and the side wall 51, forming a layer of gas that is interposed between the dose D and the internal surface of the transferring chamber 50. This layer of gas enables adhesion between the dose D and the walls 22a, 22b and 51 to be prevented or at least limited.

As an alternative to the porous walls disclosed above, walls of non-porous material may be provided in which numerous small holes are obtained such as to enable the passage of gas through them. According to a further alternative, the porous walls are replaced by a wall obtained by means of a plurality of elements next to one another between which slots are defined that are traversable by the gas.

Also the versions in Figures 4 and 5 can be provided with anti-adhesion means of the type illustrated in Figure 3, associated with the side wall 51 and/or the first forming wall 122a and with a second forming wall obtained in the second side portion of the second closing element 525b, and/or of the first base portion 14a and of the second base portion.

In an alternative version that is not shown, the anti-adhesion means comprises cooling means for cooling the side surface 51b and/or the concave surfaces 28 and/or the surface 28' and/or the flat surface 16. The cooling means comprises conduit means in which a cooling fluid can circulate at a temperature that is lower than the temperature of the dose D. The decrease in the temperature of the side surface 51b and/or of the concave surfaces 28 and/or of the surface 28' and/or of the flat surface 16 reduces the adhesion effect between the dose D and the aforementioned surfaces.

In the versions disclosed above, the dose D drops through gravity from the transferring chambers 50 to the dies 21.

In a version that is not shown, an ejecting device can be provided for facilitating the fall of the dose D from the transferring chambers 50 to the respective dies 21. The ejecting device comprises blower means that is above and at the transferring chamber 50 when it is aligned on the die 21. After the closing means 2 has been taken to the opening configuration A, the blower means delivers a pressurised fluid, for example air, inside the transferring chamber 50 through the upper opening 38 to push the dose D towards the die 21 underneath.

The apparatus 1 furthermore comprises sensor means for checking that the dose D is present in the housing 50a and is correctly transferred to the dies 21.

As shown in Figure 13, the sensor means comprises a sensor 69 arranged in a fixed position on the apparatus 1 near the end of the first portion T1. The sensor 69 checks that the dose D has reached the vicinity of the closing means 2, i.e. that it is ready to be delivered to the die 21.

In the version in Figure 3, the sensor 69 is positioned along the loop path P2 in such a way that, when a transferring chamber 50 transits in front of the sensor 69, the latter faces a slot 74 interposed between the side wall 51 and the closing means 2. The sensor 69 detects whether the dose D has descended inside the transferring chamber 50 until it reaches a desired position in the slot 74.

In the version in Figure 4, the sensor 69 is positioned along the loop path P2 in such a way that, when a transferring chamber 50 transits in front of the sensor 69, the latter faces the gap 72 defined between the annular body 17 and the lower base wall 52. The sensor 69 detects whether the end zone 119 of the dose D2 is reached at the gap 72, in a desired position.

In the version in Figure 5, the sensor 69 is positioned along the loop path P2 at a lower level than the first closing element 525a and the second closing element 525b. When a transferring chamber 50 passes in front of the sensor 69, the latter checks whether the end zone 219 of the dose D3 protrudes underneath the closing means 2 by a desired quantity.

The sensor 69 is thus a position sensor that can check not only whether the end zone of the dose is present in the slot 74 (Figure 3), or in the gap 72 (Figure 4), or protrudes below the closing means 2 (Figure 5), but also that said end zone has reached a desired position in relation to the slot 74 (Figure 3), or in the gap 72 (Figure 4), or yet below the closing means 2 (Figure 5). If the end zone has reached the desired position, the respective dose can be correctly transferred to the die 21 along the second portion T2.

The sensor means can also comprise a further sensor 70 arranged upstream of the sensor 69 in relation to an advance direction V of the transferring chambers 50 along the loop path P2. The further sensor 70 is positioned at a higher level than the sensor 69, i.e. higher than the latter. Also the further sensor 70 is positioned in such a way that, when a transferring chamber 50 transits in front of the further sensor 70, the latter faces the slot 74 (Figure 3), or the gap 72 (Figure 4), or again is positioned below the first closing element 525a and the second closing element 525b (Figure 5).

When the transferring chamber 50 passes in front of the further sensor 70, the dose, if it is descending correctly inside the transferring chamber 50, may be in a known reference position. Such a position is retracted in relation to the desired position detectable by the sensor 69. If the further sensor 70 detects that the dose is in the reference position, then the dose is descending correctly inside the transferring chamber 50 and the apparatus 1 is operating correctly. If on the other hand the further sensor 70 detects that the dose is further forward or retracted in relation to the reference position, then the dose is moving too fast or too slowly inside the transferring chamber 50. This means that the apparatus 1 is operating in a faulty condition.

The further sensor 70 thus enables any operating faults to be detected even when the sensor 69 detects that the dose can be correctly transferred from the transferring chamber 50 to the die 21. This enables the operator to realise that the apparatus 1 is not operating perfectly, for example because the plastics are deteriorating or because there have been failures of mechanical parts and the apparatus 1 has therefore stopped. As the fault is detected at an early stage when it still does not prejudice the correct transfer of the dose to the die 21, the operator may arrange a normal stop of the apparatus 1 to intervene on the cause of the operating fault.

If there were no sensor means, and in particular the further sensor 70, the operator would realise that the apparatus 1 is not working correctly only when the fault becomes so critical as to jeopardise the correct transfer of the dose into the die 21. It would therefore be necessary to stop the apparatus 1 by following an emergency stop procedure that is more problematic than the normal stop. In fact, whereas with the normal stop the apparatus 1 stops only after processing all the doses already dispensed by the dispensing means 10, in the case of an emergency stop the apparatus 1 stops immediately. The doses already dispensed by the dispensing means 10 and still present in the apparatus 1 must be removed manually, which involves lengthy time losses.

The further sensor 70 may also provide information on how the descent of the doses inside a transferring chamber 50 evolves over time, which may enable any operating parameters to be corrected that unchanged could cause serious faults. For example, if it is detected that the dose moves too slowly inside the transferring chamber 50, retroactive control means that is not shown can be used to act on the cooling means to decrease the temperature of the cooling fluid in the transferring chamber 50 in question. The temperature decrease of the side surface 51b and possibly of the concave surface 28 or of the surface 28' is such as to reduce the effect of adhesion between the dose and said surfaces and improve the descent of the dose inside the housing 50a.

The apparatus 1 may comprise rejecting means 58 to reject any defective dose as the latter is conveyed from the first transferring means 40. The rejecting means 58 is positioned upstream of the delivery position C in relation to the advance direction V of the first transferring means 40. The rejecting means 58 may comprise a pneumatic device, for example provided with at least a nozzle to deliver a jet of pressurised fluid, such as compressed air. If it is desired to reject a faulty dose contained in a transferring chamber 50, the first closing element 525a and the second closing element 525b of that transferring chamber 50, in the vicinity of the rejecting means 58, are positioned in the opening configuration A. The nozzle of the rejecting means 58 delivers a jet of compressed air above the transferring chamber 50. The jet of compressed air projects the faulty dose outside the transferring chamber 50 through the opening 3. The faulty dose is then removed from the apparatus 1 by conveying means comprising, for example, a slide.

The sensor means may comprise a presence sensor 71 positioned downstream of the rejecting means 58 in relation to the advance direction V to check whether any faulty dose has been correctly removed from the transferring chamber 50 by the rejecting means 58. The presence sensor 71 is positioned along the loop path P2 at a higher level than the transferring chambers 50, in such a way that each transferring chamber 50 passes periodically below the presence sensor 71. In an alternative version, the presence sensor 71 can be positioned at a lower level than the transferring chambers 50.

The presence sensor 71 is arranged in the vicinity of the rejecting means 58 so that, when a transferring chamber 50 from which a faulty dose has been ejected reaches the presence sensor 71, the first closing element 525a and the second closing element 525b are still in the opening configuration A. The presence sensor 71 can thus check whether the housing 50a is empty, in which case the faulty dose has been correctly rejected or whether the housing 50a is still occupied by the faulty dose, in which case the rejecting means 58 has not operated correctly.

The sensor means may also comprise a further presence sensor 73, positioned downstream of the delivery position C in relation to the advance direction V to check that the doses have been correctly delivered by the transferring chambers 50 to the dies 21. The further presence sensor 73 is completely similar to the presence sensor 71 and is positioned along the loop path P2 at an upper level in relation to the transferring chambers 50. In an alternative version, the further presence sensor 73 can be positioned at a lower level in relation to the transferring chambers 50. The further presence sensor 73 is arranged in the vicinity of the delivery position C so that, when each transferring chamber 50 reaches the further presence sensor 73, the first closing element 525a and the second closing element 525b are still in the opening configuration A. The further presence sensor 73 detects whether the housing 50a of each transferring chamber 50 is empty, in which case the respective dose has been correctly transferred to a die 21, or whether a dose is still present in the housing 50a. In the latter case, the dose has not been transferred to the die 21 as expected and the apparatus 1 must be stopped to remove the dose from the respective transferring chamber 50.

## Claims

1. Apparatus comprising:
- an extruder (10) for extruding a dose (D) of plastics;
- dose transferring means (50);
- receiving means (21) for receiving said dose (D) from said dose transferring means (50);
**characterized by** said dose transferring means (50) having an internal cavity (50a) for housing said dose (D), said dose transferring means (50) being movable along a looped path (P2) for transferring said dose (D) and said dose transferring means (50) comprising first closing means (525a) cooperating with second closing means (525b) to close and/or open an opening (3) obtained in said dose transferring means (50) and traversable by said dose (D).

2. Apparatus according to claim 1, wherein said dose transferring means (50) comprises end-forming means (18) for shaping an end zone (19; 119; 219) of an elongated body (39) of said dose (D), in such a way as to decrease a transverse dimension (M) of said elongated body (39) in the vicinity of said end zone (19; 119; 219).

3. Apparatus according to claim 2, wherein said end-forming means (18) comprises a forming wall (22a, 22b; 122a) surrounding at least partially said end zone (19; 119; 219) when said dose (D) is inside said dose transferring means (50).

4. Apparatus according to claim 3, wherein said forming wall (22a, 22b; 122a) is internally delimited by a concave surface (28; 28') suitable for interacting with said dose (D).

5. Apparatus according to claim 4, wherein said concave surface (28) defines on said end-forming means (18) a recess having the shape of a spherical cover.

6. Apparatus according to claim 4, wherein said concave surface (28') defines on said end-forming means (18) a frustum-conical recess.

7. Apparatus according to claim 6, wherein said end-forming means (18) furthermore comprises a flat wall (16) that defines a lesser base of said frustum-conical recess.

8. Apparatus according to claim 6, wherein said end-forming means (18) is axially open so that said frustum-conical recess is a through recess.

9. Apparatus according to any one of claims 2 to 8, wherein said end-forming means (18) comprises first end-forming means (22a; 122a) obtained in said first closing means (525a).

10. Apparatus according to claim 9, wherein said end-forming means (18) comprises second end-forming means (22b) obtained in said second closing means (525b).

11. Apparatus according to claim 10, wherein said first end-forming means (22a; 122a) and said second end-forming means (22b) are symmetrical with respect to a longitudinal plane of said dose transferring means (50).

12. Apparatus according to any preceding claim, wherein said dose transferring means (50) is delimited by side wall means (51, 51') each extending along a respective longitudinal axis.

13. Apparatus according to any one preceding claim, wherein said first closing means (525a) and said second closing means (525b) are movable between an opening configuration (A), in which said first closing means (525a) and said second closing means (525b) are spaced apart from one another to enable said dose (D) to be transferred to said receiving means (21) through said opening (3), and a closing configuration (B), in which said first closing means (525a) and said second closing means (525b) are brought alongside each other to prevent said dose (D) from exiting from said dose transferring means (50).

14. Apparatus according to claim 13, as appended to claim 12, wherein said first closing means (525a) and said second closing means (525b) are translatable on a plane that is transverse to said longitudinal axis.

15. Apparatus according to claim 13, as appended to claim 12, wherein said first closing means (525a) and said second closing means (525b) are respectively rotatable around a first axis (4a) and a second axis (4b).

16. Apparatus according to claim 15, wherein said first axis (4a) and said second axis (4b) are parallel to each other.

17. Apparatus according to claim 16, wherein said first axis (4a) and said second axis (4b) are parallel to said longitudinal axis.

18. Apparatus according to claim 16, wherein said first axis (4a) and said second axis (4b) are orthogonal to said longitudinal axis.

19. Apparatus according to any preceding claims, wherein said first closing means (525a) and said second closing means (525b) are driven by a common driving device (7).

20. Apparatus according to claim 19, wherein said driving device comprises a linear actuator (7).

21. Apparatus according to claim 19 or 20, wherein said driving device (7) is connected to said first closing means (525a), said second closing means (525b) being drivable by said first closing means (525a) through connecting rod means (55).

22. Apparatus according to claim 21, wherein said driving device (7) is connected to first lever means (6) fixed to a first closing element (525a) of said first closing means.

23. Apparatus according to claim 22, as claim 19 is appended to any one of claims 15 to 18, wherein said first lever means (6) is rotatable around said first axis (4a) by said driving device (7).

24. Apparatus according to claim 22 or 23, wherein said second closing means comprises a second closing element (525b) fixed to second lever means (61).

25. Apparatus according to claim 24, wherein said first lever means (6) is rotatably connected to said second lever means (61) by said connecting rod means (55).

26. Apparatus according to any preceding claim, wherein said receiving means (21) is arranged below said dose transferring means (50) when said dose (D) is delivered to said receiving means (21).

27. Apparatus according to any preceding claim, and furthermore comprising further dose transferring means (31) suitable for removing said dose (D) from an extruder outlet (11) and transferring said dose (D) to said dose transferring means (50).

28. Apparatus according to any preceding claim, wherein said receiving means comprises moulding means (21) for compression moulding a dose (D) of plastics.

29. Apparatus according to claim 28, wherein said moulding means (21) is such as to obtain a container preform from said dose (D).

30. Apparatus according to claim 28 or 29, wherein said
moulding means (21) comprises a plurality of moulding units fitted to a carousel rotatable around a rotation axis.

31. Apparatus according to claim 30, wherein said rotation axis is vertical.

32. Apparatus according to any preceding claim, and furthermore comprising sensor means (69, 70, 71, 73) for detecting said dose (D) in said dose transferring means (50).

33. Apparatus according to claim 32, wherein said sensor means (69, 70, 71, 73) is positioned along said looped path (P2) at a level such as to detect said dose (D) in the vicinity of said first closing means (525a) and of said second closing means (525b).

34. Apparatus according to claim 33, wherein said sensor means (69, 70, 71, 73) is positioned along said looped path (P2) at a level such as to detect said dose (D) intercepting slot means (72; 74) of said dose transferring means (50).

35. Apparatus according to any one of claims 32 to 34, wherein said sensor means (69, 70, 71, 73) comprises position sensor means (69, 70) for detecting the position of an end zone (19; 119; 219) of said dose (D) in the vicinity of said first closing means (525a) and of said second closing means (525b).

36. Apparatus according to claim 35, wherein said position sensor means (69, 70) comprises a position sensor (69) and a further position sensor (70) positioned upstream of said position sensor (69) along said looped path (P2).

37. Apparatus according to claim 36, wherein said position sensor (69) is arranged at a lower level than said further position sensor (70).

38. Apparatus according to any one of claims 35 to 37, wherein said dose transferring means (50) is movable along said looped path (P2) between a removing position (P) in which said dose transferring means (50) receives said dose (D) and a delivery position (C) in which said dose transferring means (50) releases said dose (D) to said receiving means (21), said position sensor means (69, 70) being arranged in the vicinity of said removing position (P) downstream thereof.

39. Apparatus according to any one of claims 32 to 38, wherein said sensor means (69, 70, 71, 73) comprises presence sensor means (71, 73) for detecting the presence of said dose (D) in said internal cavity (50a).

40. Apparatus according to any one of claims 32 to 39, and furthermore comprising rejecting means (58) for removing from said internal cavity (50a) any faulty dose.

41. Apparatus according to claim 40, as appended to claim 39, wherein said presence sensor means (71) is positioned downstream of said rejecting means (58) to check whether said any faulty dose has been ejected from said internal cavity (50a).

42. Apparatus according to claim 39, wherein said presence sensor means (73) is positioned downstream of said receiving means (21) to check whether said dose (D) has exited from said dose transferring means (50) to enter said receiving means (21).

## Patentansprüche

1. Vorrichtung, die Folgendes aufweist:
- einen Extruder (10) zum Extrudieren einer Dosis (D) aus Kunststoff;
- ein Dosistransfermittel (50);
- ein Empfangsmittel (21) zum Empfangen der Dosis (D) vom Dosistransfermittel (50);
**dadurch gekennzeichnet, dass** das Dosistransfermittel (50) einen inneren Hohlraum (50a) zum Umhüllen der Dosis (D) aufweist, dass das Dosistransfermittel (50) zum Übertragen der Dosis (D) entlang eines geschlossenen Weges (P2) bewegbar ist, und dass das Dosistransfermittel (50) ein erstes Verschlussmittel (525a) aufweist, das mit einem zweiten Verschlussmittel (525b) zusammenwirkt, um eine im Dosistransfermittel (50) vorgesehene und von der Dosis (D) durchquerbare Öffnung (3) zu schließen und/oder zu öffnen.

2. Vorrichtung gemäß Anspruch 1, bei der das Dosistransfermittel (50) ein End-Gestaltungsmittel (18) aufweist, das dem Formen eines Endbereichs (19; 119; 219) eines länglichen Körpers (39) der Dosis (D) dient, um in der Nähe des Endbereichs (19; 119; 219) eine Querabmessung (M) des länglichen Körpers (39) zu verringern.

3. Vorrichtung gemäß Anspruch 2, bei der das End-Gestaltungsmittel (18) eine Formgebungswandung (22a, 22b; 122a) aufweist, die den Endbereich (19; 119; 219) zumindest teilweise umgibt, wenn sich die Dosis (D) innerhalb des Dosistransfermittels (50) befindet.

4. Vorrichtung gemäß Anspruch 3, bei der die Formgebungswandung (22a, 22b; 122a) nach innen durch eine Konkavfläche (28; 28') begrenzt ist, die zum Zusammenwirken mit der Dosis (D) ausgebildet ist.

5. Vorrichtung gemäß Anspruch 4, bei der die Konkavfläche (28) am End-Gestaltungsmittel (18) eine Aussparung in Form einer sphärischen Abdeckung bestimmt.

6. Vorrichtung gemäß Anspruch 4, bei der die Konkavfläche (28') am End-Gestaltungsmittel (18) eine kegelstumpfartige Aussparung bestimmt.

7. Vorrichtung gemäß Anspruch 6, bei der das End-Gestaltungsmittel (18) ferner eine flache Wandung (16) aufweist, die eine kleinere Basis der kegelstumpfartigen Aussparung bestimmt.

8. Vorrichtung gemäß Anspruch 6, bei der das End-Gestaltungsmittel (18) axial geöffnet ist, so dass die kegelstumpfartige Aussparung als Durchgangsaussparung ausgebildet ist.

9. Vorrichtung gemäß einem der Ansprüche 2 bis 8, bei der das End-Gestaltungsmittel (18) ein erstes End-Gestaltungsmittel (22a; 122a) aufweist, dass im ersten Verschlussmittel (525a) vorgesehen ist.

10. Vorrichtung gemäß Anspruch 9, bei der das End-Gestaltungsmittel (18) ein zweites End-Gestaltungsmittel (22b) aufweist, das im zweiten Verschlussmittel (525b) vorgesehen ist.

11. Vorrichtung gemäß Anspruch 10, bei der das erste End-Gestaltungsmittel (22a; 122a) und das zweite End-Gestaltungsmittel (22b) in Bezug auf eine Längsebene des Dosistransfermittels (50) symmetrisch ausgebildet sind.

12. Vorrichtung gemäß einem der vorhergehenden Ansprüche, bei der das Dosistransfermittel (50) durch Seitenwandungsmittel (51, 51') begrenzt ist, die sich jeweils entlang einer entsprechenden Längsachse erstrecken.

13. Vorrichtung gemäß einem der vorhergehenden Ansprüche, bei der das erste Verschlussmittel (525a) und das zweite Verschlussmittel (525b) zwischen einer Öffnungskonfiguration (A), bei der das erste Verschlussmittel (525a) und das zweite Verschlussmittel (525b) voneinander beabstandet sind, um ein Übertragen der Dosis (D) durch die Öffnung (3) zum Empfangsmittel (21) zu ermöglichen, und einer Verschlusskonfiguration (B), bei der das erste Verschlussmittel (525a) und das zweite Verschlussmittel (525b) miteinander zur Anlage gebracht sind, um die Dosis (D) am Verlassen des Dosistransfermittels (50) zu hindern, verlagerbar sind.

14. Vorrichtung gemäß Anspruch 13, soweit rückbezogen auf Anspruch 12, bei der das erste Verschlussmittel (525a) und das zweite Verschlussmittel (525b) in einer quer zur Längsachse verlaufenden Ebene verschiebbar sind.

15. Vorrichtung gemäß Anspruch 13, soweit rückbezogen auf Anspruch 12, bei der das erste Verschlussmittel (525a) und das zweite Verschlussmittel (525b) entsprechend um eine erste Achse (4a) und eine zweite Achse (4b) verschwenkbar sind.

16. Vorrichtung gemäß Anspruch 15, bei der die erste Achse (4a) und die zweite Achse (4b) zueinander parallel sind.

17. Vorrichtung gemäß Anspruch 16, bei der die erste Achse (4a) und die zweite Achse (4b) parallel zur Längsachse sind.

18. Vorrichtung gemäß Anspruch 16, bei der die erste Achse (4a) und die zweite Achse (4b) rechtwinklig zur Längsachse sind.

19. Vorrichtung gemäß einem der vorhergehenden Ansprüche, bei der das erste Verschlussmittel (525a) und zweite Verschlussmittel (525b) durch eine gemeinsame Antriebseinrichtung (7) angetrieben sind.

20. Vorrichtung gemäß Anspruch 19, bei der die Antriebseinrichtung einen Linearaktuator (7) aufweist.

21. Vorrichtung gemäß Anspruch 19 oder 20, bei der die Antriebseinrichtung (7) mit dem erstem Verschlussmittel (525a) verbunden ist, wobei das zweite Verschlussmittel (525b) über erste Verschlussmittel (525a) mittels eines Verbindungsstabmittels (55) antreibbar ist.

22. Vorrichtung gemäß Anspruch 21, bei der die Antriebseinrichtung (7) mit einem ersten Hebelmittel (6) verbunden ist, das an einem ersten Verschlusselement (525a) des ersten Verschlussmittels festgelegt ist.

23. Vorrichtung gemäß Anspruch 22, soweit Anspruch 19 auf einen der Ansprüche 15 bis 18 rückbezogen ist, bei der das erste Hebelmittel durch die Antriebseinrichtung (7) um die erste Achse (4a) drehbar ist.

24. Vorrichtung gemäß Anspruch 22 oder 23, bei der das zweite Verschlussmittel ein zweites Verschlusselement (525b) aufweist, das an einem zweiten Hebelmittel (61) festgelegt ist.

25. Vorrichtung gemäß Anspruch 24, bei der das erste Hebelmittel (6) durch das Verbindungsstabmittel (55) mit dem zweiten Hebelmittel (61) drehbar verbunden ist.

26. Vorrichtung gemäß einem der vorhergehenden Ansprüche, bei der das Empfangsmittel (21) unter dem Dosistransfermittel (50) angeordnet ist, wenn die Dosis (D) an das Empfangsmittel (21) übergeben wird.

27. Vorrichtung gemäß einem der vorhergehenden Ansprüche, die ferner ein weiteres Dosistransfermittel (31) aufweist, das dazu ausgebildet ist, die Dosis (D) einem Extruderauslass (11) abzunehmen und zum Dosistransfermittel (50) zu übertragen.

28. Vorrichtung gemäß einem der vorhergehenden Ansprüche, bei der das Empfangsmittel Formmittel (21) zum Formpressen einer Dosis (D) aus Kunststoff aufweist.

29. Vorrichtung gemäß Anspruch 28, bei der das Formmittel (21) ein Erlangen einer Behältervorform aus der Dosis (D) bewirkt.

30. Vorrichtung gemäß Anspruch 28 oder 29, bei der das Formmittel (21) eine Mehrzahl von Formeinheiten aufweist, die an einem um eine Drehachse drehbaren Karussell angebracht sind.

31. Vorrichtung gemäß Anspruch 30, bei der die Drehachse vertikal ist.

32. Vorrichtung gemäß einem der vorhergehenden Ansprüche, die ferner ein Sensormittel (69, 70, 71, 73) zum Erkennen der Dosis (D) im Dosistransfermittel (50) aufweist.

33. Vorrichtung gemäß Anspruch 32, bei der das Sensormittel (69, 70, 71, 73) entlang des geschlossenen Weges (P2) auf einem Niveau angeordnet ist, um die Dosis (D) in der Nähe des ersten Verschlussmittels (525a) und des zweiten Verschlussmittels (525b) zu erkennen.

34. Vorrichtung gemäß Anspruch 33, bei der das Sensormittel (69, 70, 71, 73) entlang des geschlossenen Weges (P2) auf einem Niveau angeordnet ist, um das Auffangschachtmittel (72; 74) des Dosistransfermittels (50) für die Dosis (D) zu erkennen.

35. Vorrichtung gemäß einem der Ansprüche 32 bis 34, bei der das Sensormittel (69, 70, 71, 73) ein Positionssensormittel (69, 70) zum Erkennen der Position eines Endbereichs (19; 119; 219) der Dosis (D) in der Nähe des ersten Verschlussmittels (525a) und des zweiten Verschlussmittels (525b) aufweist.

36. Vorrichtung gemäß Anspruch 35, bei der das Positionssensormittel (69, 70) einen Positionssensor (69) und einen weiteren Positionssensor (70), der dem Positionssensor (69) entlang des geschlossenen Weges (P2) vorgelagert ist, aufweist.

37. Vorrichtung gemäß Anspruch 36, bei der der Positionssensor (69) auf einem niedrigeren Niveau als der weitere Positionssensor (70) angeordnet ist.

38. Vorrichtung gemäß einem der Ansprüche 35 bis 37, bei der das Dosistransfermittel (50) entlang des geschlossenen Weges (P2) zwischen einer Abnahmeposition (P), bei der das Dosistransfermittel (50) die Dosis (D) empfängt, und einer Übergabeposition (C), bei der das Dosistransfermittel (50) die Dosis (D) an das Empfangsmittel (21) abgibt, verlagerbar ist, wobei das Positionssensormittel (69, 70) in der Nähe der Abnahmeposition (P) nachgelagert zu dieser angeordnet ist.

39. Vorrichtung gemäß einem der Ansprüche 32 bis 38, bei der das Sensormittel (69, 70, 71, 73) ein Präsenzsensormittel (71, 73) zum Erkennen der Anwesenheit der Dosis (D) im inneren Hohlraum (50a) aufweist.

40. Vorrichtung gemäß einem der Ansprüche 32 bis 39, die ferner ein Absonderungsmittel (58) zum Entfernen jeder fehlerhaften Dosis aus dem inneren Hohlraum (50a) aufweist.

41. Vorrichtung gemäß Anspruch 40, soweit auf Anspruch 39 rückbezogen, bei der das Präsenzsensormittel (71) dem Absonderungsmittel (58) nachgelagert ist, um zu prüfen, ob jede fehlerhafte Dosis aus dem inneren Hohlraum (50a) ausgeworfen wurde.

42. Vorrichtung gemäß Anspruch 39, bei der das Präsenzsensormittel (73) dem Empfangsmittel (21) nachgelagert ist, um zu prüfen, ob die Dosis (D) aus dem Dosistransfermittel (50) ausgetreten ist, um in das Empfangsmittel (21) einzugehen.

## Revendications

1. Dispositif comprenant:
- une extrudeuse (10) destinée à extruder une dose (D) de matière plastique ;
- des moyens (50) de transfert de la dose ;
- des moyens récepteurs (21) destinés à recevoir ladite dose (D) desdits moyens (50) de transfert de la dose ;
***caractérisé en ce que*** lesdits moyens (50) de transfert de la dose présentent une cavité interne (50a) destinée à contenir ladite dose (D), lesdits moyens (50) de transfert de la dose sont déplaçables le long d'un trajet en boucle (P2) afin de transférer ladite dose (D), et lesdits moyens (50) de transfert de la dose comprennent des premiers moyens de fermeture (525a) coopérant avec des deuxièmes moyens de fermeture (525b) pour fermer et/ou ouvrir une ouverture (3) ménagée dans lesdits moyens (50) de transfert de la dose et traversable par ladite dose (D).

2. Dispositif selon la revendication 1, dans lequel lesdits moyens (50) de transfert de la dose comprennent des moyens (18) de formage d'une extrémité destinés à façonner une zone d'extrémité (19 ; 119 ; 219) d'un corps allongé (39) de ladite zone (D), de manière à diminuer une dimension transversale (M) dudit corps allongé (39) au voisinage de ladite zone d'extrémité (19 ; 119 ; 219).

3. Dispositif selon la revendication 2, dans lequel lesdits moyens (18) de formage d'une extrémité comprennent une paroi de formage (22a, 22b ; 122a) entourant, au moins partiellement, ladite zone d'extrémité (19 ; 119 ; 219) lorsque ladite dose (D) se trouve à l'intérieur desdits moyens (50) de transfert de la dose.

4. Dispositif selon la revendication 3, dans lequel ladite paroi de formage (22a, 22b ; 122a) est délimité intérieurement par une surface concave (28 ; 28') apte à interagir avec ladite dose (D).

5. Dispositif selon la revendication 4, dans lequel ladite surface concave (28) définit, sur lesdits moyens (18) de formage d'une extrémité, un évidement ayant la forme d'un couvercle sphérique.

6. Dispositif selon la revendication 4, dans lequel ladite surface concave (28') définit sur lesdits moyens (18) de formage d'une extrémité, un évidement tronconique.

7. Dispositif selon la revendication 6, dans lequel lesdits moyens (18) de formage d'une extrémité comprennent en outre une paroi plate (16) qui définit une petite base dudit évidement tronconique.

8. Dispositif selon la revendication 6, dans lequel lesdits moyens (18) de formage d'une extrémité sont ouverts axialement de telle sorte que ledit évidement tronconique soit un évidement débouchant.

9. Dispositif selon l'une quelconque des revendications 2 à 8, dans lequel lesdits moyens (18) de formage d'une extrémité comprennent des premiers moyens (22a ; 122a) de formage d'une extrémité, ménagés dans lesdits premiers moyens de fermeture (525a).

10. Dispositif selon la revendication 9, dans lequel lesdits moyens (18) de formage d'une extrémité comprennent des deuxièmes moyens (22b) de formage d'une extrémité, ménagés dans lesdits deuxièmes moyens de fermeture (525b).

11. Dispositif selon la revendication 10, dans lequel lesdits premiers moyens (22a ; 122a) de formage d'une extrémité et lesdits deuxièmes moyens (22b) de formage d'une extrémité sont symétriques par rapport à un plan longitudinal desdits moyens de transfert (50) de la dose.

12. Dispositif selon l'une quelconque des revendications précédentes, dans lequel lesdits moyens (50) de transfert de la dose sont délimités par des moyens de paroi latérale (51, 51') s'étendant chacun le long d'un axe longitudinal respectif.

13. Dispositif selon l'une quelconque des revendications précédentes, dans lequel lesdits premiers moyens de fermeture (525a) et lesdits deuxièmes moyens de fermeture (525b) sont mobiles entre une configuration d'ouverture (A), dans laquelle lesdits premiers moyens de fermeture (525a) et lesdits deuxièmes moyens de fermeture (525b) sont écartés l'un de l'autre pour permettre à ladite dose (D) d'être transférée auxdits moyens récepteurs (21) par ladite ouverture (3), et une configuration de fermeture (B), dans laquelle lesdits premiers moyens de fermeture (525a) et lesdits deuxièmes moyens de fermeture (525b) sont amenés côte à côte pour empêcher ladite dose (D) de sortir desdits moyens (50) de transfert de dose.

14. Dispositif selon la revendication 13, lorsqu'elle est dépendante de la revendication 12, dans lequel lesdits premiers moyens de fermeture (525a) et lesdits deuxièmes moyens de fermeture (525b) sont déplaçables en translation sur un plan transversal audit axe longitudinal.

15. Dispositif selon la revendication 13, lorsqu'elle est dépendante de la revendication 12, dans lequel lesdits premiers moyens de fermeture (525a) et lesdits deuxièmes moyens de fermeture (525b) sont rotatifs respectivement autour d'un premier axe (4a) et d'un deuxième axe (4b).

16. Dispositif selon la revendication 15, dans lequel ledit premier axe (4a) et ledit deuxième axe (4b) sont parallèles entre eux.

17. Dispositif selon la revendication 16, dans lequel ledit premier axe (4a) et ledit deuxième axe (4b) sont parallèles audit axe longitudinal.

18. Dispositif selon la revendication 16, dans lequel ledit premier axe (4a) et ledit deuxième axe (4b) sont orthogonaux audit axe longitudinal.

19. Dispositif selon l'une quelconque des revendications précédentes, dans lequel lesdits premiers moyens de fermeture (525a) et lesdits deuxièmes moyens de fermeture (525b) sont entraînés par un dispositif d'entraînement commun (7).

20. Dispositif selon la revendication 19, dans lequel ledit dispositif d'entraînement comprend un actionneur linéaire (7).

21. Dispositif selon la revendication 19 ou 20, dans lequel ledit dispositif d'entraînement (7) est relié auxdits premiers moyens de fermeture (525a), lesdits deuxièmes moyens de fermeture (525b) étant entraînables par lesdits premiers moyens de fermeture (525a) par l'intermédiaire de moyens de biellette (55).

22. Dispositif selon la revendication 21, dans lequel ledit dispositif d'entraînement (7) est raccordé à des premiers moyens de levier (6) fixés à un premier élément de fermeture (525a) desdits premiers moyens de fermeture.

23. Dispositif selon la revendication 22, lorsque la revendication 19 est dépendante de l'une quelconque des revendications 15 à 18, dans lequel lesdits premiers moyens de levier (6) peuvent être entraînés en rotation autour dudit premier axe (4a) au moyen dudit dispositif d'entraînement (7).

24. Dispositif selon la revendication 22 ou 23, dans lequel lesdits deuxièmes moyens de fermeture comprennent un deuxième élément de fermeture (525b) fixé à des deuxièmes moyens de levier (61).

25. Dispositif selon la revendication 24, dans lequel lesdits premiers moyens de levier (6) sont raccordés de manière rotative auxdits deuxièmes moyens de levier (61) par lesdits moyens de biellette (55).

26. Dispositif selon l'une quelconque des revendications précédentes, dans lequel lesdits moyens récepteurs (21) sont placés sous lesdits moyens de transfert (50) de la dose lorsque ladite dose (D) est délivrée auxdits moyens récepteurs (21).

27. Dispositif selon l'une quelconque des revendications précédentes, et comprenant de plus des moyens supplémentaires (31) de transfert de dose aptes à retirer ladite dose (D) d'un orifice de sortie (11) de l'extrudeuse et à transférer ladite dose (D) auxdits moyens (50) de transfert de dose.

28. Dispositif selon l'une quelconque des revendications précédentes, dans lequel lesdits moyens récepteurs comprennent des moyens de moulage (21) pour le moulage par compression d'une dose (D) de matière plastique.

29. Dispositif selon la revendication 28, dans lequel lesdits moyens de moulage (21) sont propres à l'obtention d'une préforme de récipient à partir ladite dose (D).

30. Dispositif selon la revendication 28 ou 29, dans lequel lesdits moyens de moulage (21) comprennent une pluralité d'unités de moulage fixées à un carrousel pouvant tourner autour d'un axe de rotation.

31. Dispositif selon la revendication 30, dans lequel ledit axe de rotation est vertical.

32. Dispositif selon l'une quelconque des revendications précédentes, et comprenant de plus des moyens de capteur (69, 70, 71, 73) pour détecter ladite dose (D) dans lesdits moyens de transfert (50) de la dose.

33. Dispositif selon la revendication 32, dans lequel lesdits moyens de capteur (69, 70, 71, 73) sont placés le long dudit trajet en boucle (P2) à un niveau propre à la détection de ladite dose (D) au voisinage desdits premiers moyens de fermeture (525a) et desdits deuxièmes moyens de fermeture (525b).

34. Dispositif selon la revendication 33, dans lequel lesdits moyens de capteur (69, 70, 71, 73) sont placés le long dudit trajet en boucle (P2) à un niveau propre à détecter que ladite dose (D) intercepte des moyens de fente (72 ; 74) desdits moyens (50) de transfert de dose.

35. Dispositif selon l'une quelconque des revendications 32 à 34, dans lequel lesdits moyens de capteur (69, 70, 71, 73) comprennent des moyens de capteur de position (69, 70) pour détecter la position d'une zone d'extrémité (19 ; 119 ; 219) de ladite dose (D) au voisinage desdits premiers moyens de fermeture (525a) et desdits deuxièmes moyens de fermeture (525b).

36. Dispositif selon la revendication 35, dans lequel lesdits moyens de capteur de position (69, 70) comprennent un capteur de position (69) et un autre capteur de position (70) placé en amont dudit capteur de position (69) le long dudit trajet en boucle (P2).

37. Dispositif selon la revendication 36, dans lequel ledit capteur de position (69) est placé à un niveau inférieur audit autre capteur de position (70).

38. Dispositif selon l'une quelconque des revendications 35 à 37, dans lequel lesdits moyens de transfert de dose (50) sont mobiles le long dudit trajet en boucle (P2) entre une position d'enlèvement (P) dans laquelle lesdits moyens (50) de transfert de la dose reçoivent ladite dose (D) et une position de déchargement (C) dans laquelle lesdits moyens (50) de transfert de la dose libèrent ladite dose (D) dans lesdits moyens récepteurs (21), lesdits moyens de capteur de position (69, 70) étant agencés au voisinage de ladite position d'enlèvement (P) en aval de celle-ci.

39. Dispositif selon l'une quelconque des revendications 32 à 38, dans lequel lesdits moyens de capteur (69, 70, 71, 73) comprennent des moyens de capteur de présence (71, 73) destinés à détecter la présence de ladite dose (D) dans ladite cavité interne (50a).

40. Dispositif selon l'une quelconque des revendications 32 à 39, et comprenant de plus des moyens de rejet (58) pour retirer de ladite cavité interne (50a) toute dose défectueuse.

41. Dispositif selon la revendication 40, lorsqu'elle est dépendante de la revendication 39, dans lequel lesdits moyens de capteur de présence (71) sont placés en aval desdits moyens de rejet (58) pour vérifier si ladite dose défectueuse a été éjectée de ladite cavité interne (50a).

42. Dispositif selon la revendication 39, dans lequel lesdits moyens de capteur de présence (73) sont placés en aval desdits moyens récepteurs (21) afin de vérifier si ladite dose (D) est sortie desdits moyens (50) de transfert de dose pour entrer dans lesdits moyens récepteur (21).
